# EUROPEAN PATENT APPLICATION

(11) **EP 4 664 710 A1**
(43) Date of publication of application: **17.12.2025**
(21) Application number: 24181162.9
(22) Date of filing: 10.06.2024
(51) Int. Cl.: H02J 7/00

(54) **TOTAL CAPACITY ESTIMATION FOR BATTERIES BASED ON VOLTAGE FEATURES**

(71) Applicant: TWAICE Technologies GmbH, 80807 München (DE)
(72) Inventor: KINK, Kilian, 85375 Neufahrn (DE); WILDFEUER, Leo, 80336 Munich (DE); KARGER, Alexander, 81667 Munich (DE); WEHNER, Moritz, 81925 Munich (DE); GRUBWINKLER, Stefan, 84036 Landshut (DE); HUNGERSHAUSEN, Rainer, 90425 Nuremberg (DE); SAKKARI, Venkata Sridhar, 55131 Mainz (DE); HENGST, Johannes, 80801 Munich (DE)
(74) Representative: Kraus & Lederer PartGmbB

(57) **Abstract**

Techniques are disclosed to determine the total capacity (239) of a battery. For this, a partial capacity (231) is considered, the partial capacity (231) being held by the battery at a certain feature (92) along a voltage curve (200, 201).

## Description

### TECHNICAL FIELD

Various examples of the disclosure generally pertain to determining an estimate of a total capacity of a battery. Various examples specifically pertain to determining the estimate of the total capacity based on a predetermined partial capacity that is associated with a feature of a voltage curve obtained for a charging or discharging process.

### BACKGROUND

As rechargeable batteries age, their total capacity diminishes, and their state of health (SoH) degrades. Therefore, it is important to be able to accurately estimate the total capacity of such batteries.

Various existing techniques aim to determine an estimate of the total capacity of batteries, each with varying degrees of accuracy and complexity.

One such method is the impedance-based estimation. This approach involves measuring the battery's impedance and comparing it with that of a new battery. The correlation between the impedance of an aged battery and that of a new battery is used to estimate the capacity of the aged battery. However, this method often yields inaccurate results due to the influence of various factors on impedance, including battery age, and the relationship between impedance and capacity is complex.

Another method is voltage-based estimation. This method compares the capacity of an aged battery with that of a new battery across two defined voltage points. Although potentially more accurate, this method typically requires a high depth of discharge (DoD) to achieve reliable results, necessitating prolonged measurement periods.

In yet another method, information obtained from the battery management system (BMS) are utilized in some techniques. These methods may directly use the SoH provided by the BMS or employ other information such as the state of charge (SoC) to estimate SoH. The precision of these methods may be constrained by the accuracy of the BMS and may also be contingent upon the operational strategy employed by the BMS.

### SUMMARY

Accordingly, there is a need for advanced techniques of determining an estimate of the total capacity of a battery. In particular, there is a need for techniques that overcome or mitigate at least some of the above-identified restrictions and drawbacks. A need exists for techniques of determining an estimate of the total capacity of the battery quickly, yet at relatively high accuracy.

This need is met by the features of the independent claims. The features of the dependent claims define embodiments.

Techniques disclosed herein are based on a simplified model of the effects of battery aging on the voltage curve of the battery. The voltage curve is sampled to find characteristic fingerprint features that can serve as a basis for the estimation of the total capacity of the battery. The voltage curve may be sampled using dedicated measurements and using a partial load profile. The partial load profile is tailored to quickly sample the voltage curve at the required accuracy to detect a predetermined feature that serves as the basis for the estimation of the total capacity of the battery. It is also possible to use in-life voltage curves. The partial capacity held by the battery at the feature is one part of the total capacity. A remaining part of the total capacity can be measured and/or estimated using other techniques generally known in the art.

A method of determining an estimate of a total capacity of a battery is disclosed. The estimate of the total capacity is determined while the battery is under control of a battery-management system. The battery-management system limits an operational window of the battery. The method includes obtaining a voltage curve for a charging or discharging process of the battery. The method further includes analyzing the voltage curve to detect a predetermined feature of the voltage curve. The method further includes determining the estimate of the total capacity of the battery based on a predetermined partial capacity. That predetermined partial capacity Is held by the battery when the predetermined feature is observed.

A computing device including at least one processor and a memory is disclosed. The at least one processor is configured to load program code form the memory and to execute the program code. The at least one processor, upon executing the program code, is configured to perform a method of determining an estimate of a total capacity of a battery. The estimate of the total capacity is determined while the battery is under control of a battery-management system. The battery-management system limits an operational window of the battery. The method includes obtaining a voltage curve for a charging or discharging process of the battery. The method further includes analyzing the voltage curve to detect a predetermined feature of the voltage curve. The method further includes determining the estimate of the total capacity of the battery based on a predetermined partial capacity. That predetermined partial capacity Is held by the battery when the predetermined feature is observed.

It is to be understood that the features mentioned above and those yet to be explained below may be used not only in the respective combinations indicated, but also in other combinations or in isolation without departing from the scope of the invention.

### BRIEF DESCRIPTION OF THE DRAWINGS

FIG. 1 schematically illustrates half-cell voltage curves and a full-cell voltage curve for a lithium-ion battery having a graphite anode according to various examples.
FIG. 2 schematically illustrates the impact of aging according to multiple degradation mechanisms on the voltage curves of FIG. 1.
FIG. 3 is a flowchart of a method according to various examples.
FIG. 4 schematically illustrates the full-cell voltage curve and the associated determining associated estimation of the total capacity of the battery.
FIG. 5 schematically illustrates the impact of the DoD on a feature in a voltage curve.

### DETAILED DESCRIPTION

Some examples of the present disclosure generally provide for a plurality of circuits or other electrical devices. All references to the circuits and other electrical devices and the functionality provided by each are not intended to be limited to encompassing only what is illustrated and described herein. While particular labels may be assigned to the various circuits or other electrical devices disclosed, such labels are not intended to limit the scope of operation for the circuits and the other electrical devices. Such circuits and other electrical devices may be combined with each other and/or separated in any manner based on the particular type of electrical implementation that is desired. It is recognized that any circuit or other electrical device disclosed herein may include any number of microcontrollers, a graphics processor unit (GPU), integrated circuits, memory devices (e.g., FLASH, random access memory (RAM), read only memory (ROM), electrically programmable read only memory (EPROM), electrically erasable programmable read only memory (EEPROM), or other suitable variants thereof), and software which co-act with one another to perform operation(s) disclosed herein. In addition, any one or more of the electrical devices may be configured to execute a program code that is embodied in a non-transitory computer readable medium programmed to perform any number of the functions as disclosed.

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

Various examples of the disclosure pertain to aspects associated with batteries, specifically rechargeable batteries. Batteries generate a usable voltage through the potential difference between electrons in the anode and cathode. In the anode (negative electrode), electrons possess high energy, thereby exhibiting a low electrical potential; in the cathode (positive electrode), the situation is reversed. For electrons to flow in an electric circuit that includes the battery and a load, ions move inside the battery from one electrode to another. In lithium-ion batteries (LIBs), lithium ions assume this role. They move through an electrolyte that conducts ions but not electrons. In the charged state, neutral lithium with high potential energy is stored in the in the anode, while in the discharged state, it resides at the cathode with lower potential energy. To prevent direct contact between the anode and cathode and thus a short circuit, a separator divides the two active materials.

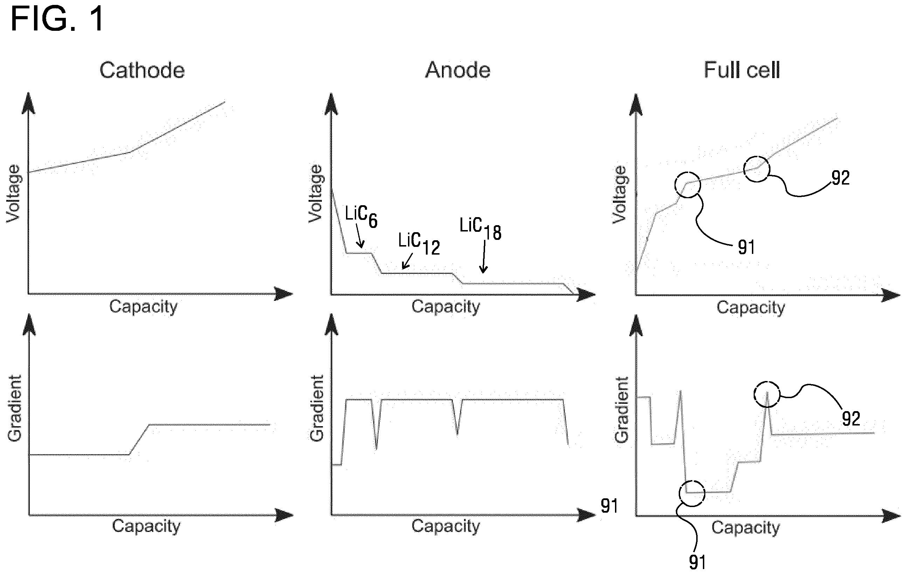

FIG. 1 illustrates half-cell and full-cell voltage curves (upper row) and associated derivatives (lower row) for a LIB. FIG. 1 is taken from Warnecke, Alexander Johannes "Degradation Mechanisms in NMC-Based Lithium-Ion Batteries" Dissertation, RWTH Aachen University, 2017.Visible in FIG. 1 are transitions between plateaus in the anode half-cell curve formed from transitions between different lithium intercalation states. Such features can be spotted, e.g., as dents and/or transition between plateaus in the differential voltage curve.

For instance, for a graphite anode of a lithium-ion battery, each feature of the anode half-cell voltage curve can be associated with lithium ions inserting into the graphite's layered structure during battery charging. Graphite consists of layers of carbon atoms arranged in a hexagonal lattice. The intercalation process progresses through four stages, forming various lithium-graphite compounds, known as LiCx phases. Stage I: Initially, lithium ions penetrate the graphite, forming LiC6, where each lithium ion intercalates between six carbon atoms. This expands the graphite layers slightly to accommodate the ions. Stage II: As the intercalation process continues, the ratio shifts to form LiC12, where one lithium ion pairs with twelve carbon atoms. This further expands the layer spacing and alters the electrical properties due to changes in the electronic structure of graphite. Stage III: The process progresses to LiC18 and LiC24, where lithium continues to fill in, but with decreased structural stability and increased stress on the graphite layers. Stage IV: The final stage results in LiC36, characterized by a high degree of intercalation.

Not all state transitions between different intercalation stages are visible in the voltage curve of the LIB. Typically, the lower SoC transitions, e.g., from LiC6 to LiC12, are more pronounced than the subsequent transitions. Furthermore, the visibility of such state transitions between the intercalation stages depends on a charging rate as well as the DoD. Thus, for detecting such features, the respective charging or discharging processes are preferably tailored in terms of charging rate, DoD, etc.

As the battery ages (cyclic ageing and /or calendric ageing), the anode and cathode as well as the ion inventory undergoes degradation, resulting in a decrease in capacity. The degradation mechanisms include the loss of active material (loss of active material at the cathode, LAMc; loss of active material at the anode, LAMa) and the inaccessibility of material cycled between the anode and cathode (e.g., for a LIB, loss of lithium inventory, LLI). Battery aging can be influenced by several factors, including but not limited to, the number of charge-discharge cycles, operating temperature, DoD, and charge rate. These factors can accelerate degradation processes.

The LAMa degradation process includes solid-electrolyte interphase (SEI) layer growth on the anode, which consumes lithium ions and electrically insulates portions of the anode, reducing the battery's total capacity and power capabilities. The LAMc degradation process includes cathode dissolution, where active material from the cathode dissolves into the electrolyte, particularly at elevated temperatures; this leads to a permanent loss of total capacity. The LLI degradation process is primarily due to Lithium plating on the anode - e-g., during fast charging or low-temperature operation - which can lead to further loss of the total capacity.

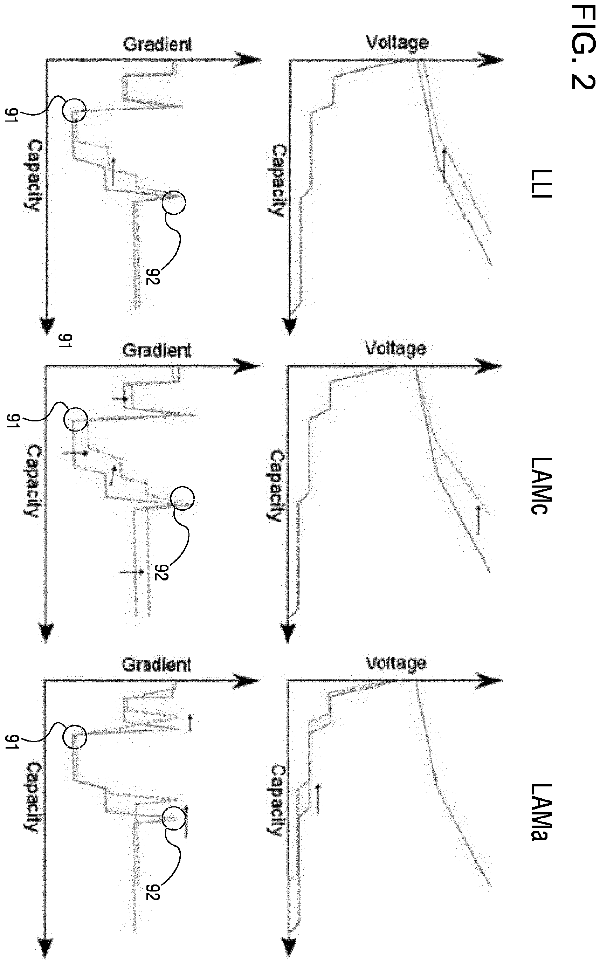

The degradation processes (LAMc, LAMa, LLI) have an influence on the voltage curves. This is shown in FIG. 2, again based on Warnecke, Alexander Johannes "Degradation Mechanisms in NMC-Based Lithium-Ion Batteries" Dissertation, RWTH Aachen University, 2017. FIG. 2, upper part, illustrates the shift in the half-cell voltage curves (upper part is cathode; lower part is anode) for the various ageing mechanisms. FIG. 2, lower part, illustrates the full cell differential voltage curve. Arrows indicate the shifts due to progressed ageing. Also illustrated in FIG. 2 are certain features 91, 92 in the voltage curve (these features are highlighted in the full-cell differential voltage curves in the lower part of FIG. 2 but would be equally visible in the non-differential voltage curves). The highlighted features 91, 92 are associated with the anode half-cell voltage curve. Thus, the position of the features along the voltage curve is impacted mainly by the LAMa degradation process. This is explained in further detail next.

For instance, the LLI degradation mechanism causes a shift between the cathode and anode half-cell voltage curves. If a BMS enforces an upper voltage threshold, this upper voltage threshold is reached at lower capacities. Thus, the operating window of the battery shrinks along with the reduction of the total capacity of the battery. The position of the features 91, 92, however, remains unaffected by the LLI degradation mechanism. LAMc causes a shrinkage of the cathode potential. Again, the position of the features 91, 92 remains unaffected; while any upper voltage threshold enforced by the BMS will be reached earlier. The operation window of the battery shrinks along with the reduction of the total capacity. The LAMa degradation process affects the position of the features 91, 92; the feature 91 at lower capacity is less affected than the feature 92 at higher capacity.

Various techniques are based on the finding that by analyzing the voltage curve to search for respective characteristic features 91, 92, an estimate of the total capacity can be determined. According to various examples, an estimate of the total capacity of the battery is determined based on a voltage curve obtained for a charging or discharging process of the battery. The voltage curve includes a sequence of voltage values obtained throughout the charging or discharging process. The voltage curve is analyzed to detect a predetermined feature, e.g., one or more of the features 91, 92. To detect such feature, a certain shape of the voltage curve may be searched. Then, based on a predetermined partial capacity held by the battery while the predetermined feature is observed, the estimate of the total capacity is determined.

Such techniques have multiple advantages. Firstly, a relatively fast measurement becomes possible. In particular, it is not required to fully discharge or charge the battery. Rather, a local measurement at or around the predetermined feature may suffice. This speeds up the measurement. Second, a relatively high accuracy of the estimate of the capacity can be attained. This is based on the finding that a position of certain features - specifically those features stemming from the anode half-cell curve, i.e., from electrolyte intercalation at the anode - along the voltage curve of a charging or discharging process associated with a change of the LixC phase is (i) generally only weakly dependent on ageing, and (ii) the residual dependency of that feature position is mainly due to LAMa degradation processes which are often are less pronounced if compared to LLI and LAMc. Thus, the partial capacity held by the battery when the predetermined features is observed is only weakly affected by ageing. Third, the total capacity can be estimated even while the battery is under control of a BMS. Disassembly of the battery is not required to determine the estimate of the total capacity. Specifically, BMSs oftentimes apply a lower voltage threshold as well as an upper voltage threshold, thereby limiting the operational window of the battery. Thus, the ability to completely discharge the battery and then employ Coulomb counting when charging the battery is limited by the limited operational window of the battery. On the other hand, based on the predetermined partial capacity available as ground truth in association with the predetermined feature, the lower limits of the operational window of the battery can be circumvented. For instance, the partial capacity held by the battery when the predetermined feature is observed may be obtained from laboratory measurements, i.e., in a state when the battery is not on the control of the BMS.

Two examples of such features 91, 92 are highlighted in FIG. 1 and FIG. 2. The feature 91 is the LiC12 intercalation feature. The feature 92 is the LiC18 intercalation feature (i.e., marking the transition from LiC12 intercalation stage to LiC18 intercalation stage). As a general rule, it would also be possible to consider other features, e.g., LiC24, or LiC36 features; however, those features are oftentimes less pronounced if compared to the LiC12 feature 91 and the LiC18 feature 92.

Next, details with respect to determining the total capacity of the battery based on the predetermined partial capacity held by the battery when the predetermined feature is observed will be explained. Consider a given feature - e.g., the feature 91 or the feature 92. The predetermined partial capacity at that voltage is *C*₁. The total capacity is *C*. Then, *C* = *C*₁ + *Cₕ* where *Cₕ* is a further partial capacity as headroom from *C*₁ to the total capacity; i.e., the further partial capacity *Cₕ* can be additionally held by the battery when being charged beyond the voltage associated with the predetermined feature. There are various techniques conceivable to determine *Cₕ*, as known, per se, in the prior art. According to examples, the further partial capacity *Cₕ* is at least partially estimated based on an open-circuit voltage (OCV) look-up according to generally known techniques and/or at least partially measured based on Coulomb counting.

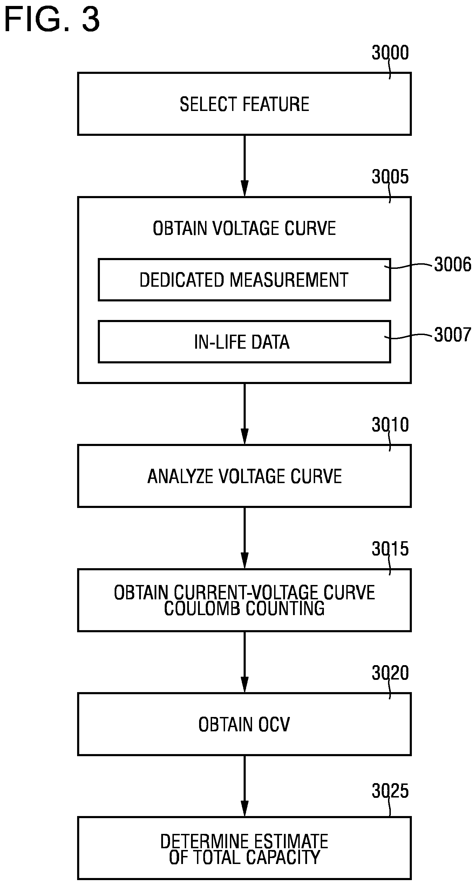

Details with respect to such techniques of determining the estimate of the total capacity will be described next in connection with FIG. 3.

FIG. 3 is a flowchart of a method according to various examples. For instance, the method of FIG. 3 may be executed by a processor of a computing device, upon loading and executing program code from a memory. The method of FIG. 3 enables to determine an estimate of the total capacity of a battery such as an LIB. This is based on a feature in a voltage curve. The feature has a certain pre-known shape for which a search can be executed by analyzing the voltage curve.

When executing the method of FIG. 3, the battery subject to the estimation of its total capacity is under the control of a BMS. The BMS limits the operational window of the battery by enforcing a lower voltage threshold and/or an upper voltage threshold. The BMS includes voltage sensors for this purpose that measure the cell voltage of multiple cells and limits the ability to further discharge or charge respective battery cells beyond those voltage thresholds.

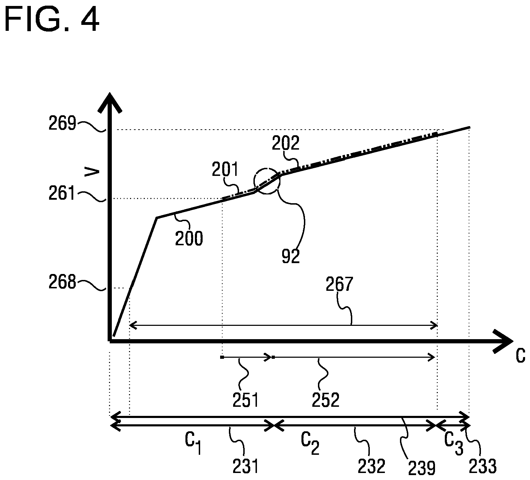

The method of FIG. 3 will be illustrated in the context of FIG. 4. FIG. 4 shows the overall voltage curve 200 for a battery. A first (partial) voltage curve 201 (dashed dotted line) - forming a certain subsection of the overall voltage curve 200 - is sampled by a first charging process 251; while a second (partial) voltage curve 202 (dashed-dotted-dotted line) - forming another subsection of the overall voltage curve 200 - is sampled by a second charging process 252. The voltage curve 200 includes certain features, here specifically the LiC18 feature 92. The total capacity 239 of the battery- even extending beyond the operational window 267 accessible due to restriction enforced by the BMS - is estimated based such features.

At optional box 3000, it is possible to select the feature serving as the basis of the estimation of the total capacity from a plurality of candidate features. For instance, the candidate features may be LiC12 and Lid 18 features, respectively marking a transition from stage I intercalation to stage II intercalation, as well as a transition from stage II to stage III.

Box 3000 is optional. In some scenarios, the feature may be fixedly predetermined.

If box 3000 is executed, then the selection may be based on one or more criteria such as a requested duration of the charging process 251 and/or the charging process 252, and/or a requested accuracy of the estimate of the total capacity.

For instance, if a high accuracy is required, then a feature located at relatively smaller partial capacities may be preferable, e.g., LiC12 or even LiC6. This is the case for two reasons. Firstly, the predetermined partial capacity is relatively smaller which reduces the systematic error that can be introduced into the estimation of the total capacity by errors rooted in the difference between the predetermined partial capacity to the true partial capacity held by the battery when the predetermined feature is observed. Secondly, those features are less susceptible to battery ageing, i.e., the relative error of the predetermined partial capacity if compared to the true partial capacity held by the battery when the predetermined feature is observed tends to be smaller for these lower-capacity features if compared to higher-capacity features such as LiC18.

However, such high accuracy typically comes at the cost of increased duration until a measurement (if executed) is completed (details with respect to the measurement will be explained later on in connection with box 3006). This is because typically the battery needs to be discharged to a low voltage or SoC to be subsequently able to observe the feature. Typically, the LiC12 feature is located in a SoC range of the battery from 20% to 40% This discharging takes time. Thus, if a rapid measurement is desirable, it is typically preferable to select, at box 3000, a higher-capacity features such as LiC18 - which is typically located in a SoC range of 50% to 70%. It should be understood that the SoC at which a certain feature is observed changes along with the varying total capacity of the battery, because the varying total capacity will affect the normalization included in the SoC calculation.

At box 3005, the first voltage curve 201 (cf. dashed-dotted line in FIG. 4) is obtained for the charging process 251. There are multiple options for implementing box 3005.

A first option - box 3006 - relates to executing a dedicated measurement. Here, an external battery test equipment is connected to the battery.

Such external battery test equipment is configured to charge or discharge the battery at a well-defined rate. The external battery test equipment can capture voltage values (e.g., by interfacing with the BMS) and/or current values while charging or discharging the battery. Thus, the external battery test equipment can provide a voltage curve, a current curve or a combined current-voltage curve. The external battery test equipment can also measure an open-circuit voltage (OCV) of the battery, by allowing the battery to rest for a certain time duration.

The external battery test equipment is employed to implement a load profile. An example load profile is summarized in TAB. 1.

**TAB. 1: Example load profile for box 3006. The load profile may be parameterized in a preparatory phase based on laboratory measurements.**

| PHASE | EXPLANATION | C-RATE |
|---|---|---|
| 1 | Charge or discharge to lower start voltage or start SoC. | high |
| 2 | First charging process 251 | low, may be set dynamically |
| 3 | Second charging process 252 | high |
| 4 | OCV | n/a |

Initially, in phase 1 (cf. TAB. 1), the battery test equipment charges or discharges (depending on the initial voltage or SoC at the beginning of box 3006) the battery until a predetermined lower voltage 261 is reached. For this purpose, charging or discharging can commence at a relatively large current magnitude until the predetermined lower voltage is reached. During phase 1, it would be also possible to monitor voltage or SoC values output by the BMS and charge or discharge until reaching a predetermined lower voltage or SoC value. As will be appreciated, there is typically available a lookup table linking voltage values with SoC values.

This lower voltage/lower SoC is within the operational window 267 enforced by the BMS, i.e., the lower voltage 261 is offset from the lower voltage threshold 268 (cf. FIG. 4) applied by the BMS.

Preferably, the lower voltage/lower SoC is in the middle - e.g., between 30% and 70% SoC - of the operational window, because this reduces the duration required for completing phase 1.

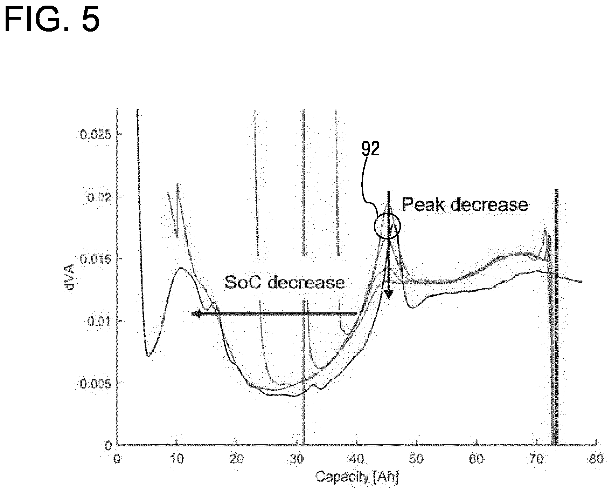

To be able to minimize the distance between the predetermined lower voltage 261 or the associated SoC, a lookup for the appropriate starting point can be executed. This is explained next. The predetermined lower voltage 261 is set - at box 3006 - so that the feature - e.g., the LiC18 feature 92, cf. FIG 4 - is likely to be observed in the voltage curve 201 obtained from the charging process. To set the predetermined lower voltage 261 or lower SoC that marks the lower boundary of the charging process 251, it is possible to perform a lookup of respective information in a database. Ground truth information can be obtained. Such lookup may be based on the type of the battery and/or a state of the battery, e.g., its operational temperature or its current SoC. This is based on the finding that the voltage at which such anode half-cell features are observed depend on the type of the battery and/or the state of the battery. Beyond the voltage position, it is also possible that the strength of the feature varies along with the starting point. For instance, briefly referring to FIG. 5: here, the differential voltage curve is shown for multiple starting SoCs; the peak pattern of the LiC18 feature decreases for decreasing starting SoCs. This is why it is helpful to use such information associated with the predetermined lower voltage of the lower SoC to determine the predetermined lower voltage 261 or lower SoC at box 3006 in FIG. 3. Optionally, an a-priori estimate of the SoH of the battery can be taken into account. This may be helpful if phase 1 is SoC-controlled, because the SoC will shift depending on changes in capacity. Further, this may be helpful if a feature is relied upon that shows a residual dependency on the SoH. Typically, this would be the case for the LiC18 feature; the LiC12 or LiC6 features typically show no significant dependency on the SoH. It is generally desirable to select the predetermined lower voltage 261 or lower SoC relatively close to the expected voltage of the predetermined feature. The look-up explained above allows to minimize the measurement duration by minimizing the time required for executing phase 2 (cf. TAB. 1); this is because the starting point of the charging process 251 is close to the feature.

Upon reaching the lower starting voltage 261 or the starting SoC, i.e., upon completing phase 1, phase 2 commences. In phase 2 (cf. TAB. 1), the battery test equipment is controlled to charge the battery starting from the predetermined lower voltage 261 (or lower SoC) for recording the voltage curve 201 for the charging process 251. The respective charging process 251 is illustrated in FIG. 4.

It is possible to set - at box 3006 - the charging rate of the charging process 251. Again, this can be based on a lookup. The lookup can be based on the type of the battery and/or the state of the battery, e.g., its SoC for operational temperature (e.g., as indicated by the BMSs). This is based on the finding that for different types of batteries and/or different states of the batteries, the respective features may be more or less pronounced in the voltage curve. Smaller charging rates support the ability to find the predetermined feature in the voltage curve. Thus, based on corresponding information, and optionally based on an a-priority estimate of the SoH of the battery (e.g., obtained from a previous estimation of the capacity or impedance), the charging rate of the charging process can be determined. The battery test equipment can then be controlled to charge the battery from the predetermined lower voltage or SoC at the respectively determined charging rate. Accordingly, based on such ground-truth information on the charging rate, it is possible to set the charging rate as large as possible - while maintaining the ability to detect the predetermined feature by analyzing the voltage curve.

As will be appreciated, the first option of executing the voltage measurement according to box 3006 relies on dedicated battery test equipment to be connected to the battery to execute the charging process. Such battery test equipment can be available in a at a test bench. For instance, an electric vehicle can be subject to a capacity inspection of its battery when being parked at such test bench. In contrast, a second option - box 3007 - relates to obtaining the voltage measurement from in-life voltage monitoring. Box 3007 is explained next.

A second option for obtaining the voltage curve (box 3007) includes loading the voltage curve from a cloud repository that includes a plurality of (candidate) in-life voltage curves acquired during field operation of the battery. For instance, the cloud repository can be populated based on measurements reported during field-deployment of the battery. For instance, for an electric vehicle, an onboard measurement unit may be provided that populates the cloud repository with the in-life voltage curves.

These in-life voltage curves are obtained during normal operation of the battery; i.e., a dedicated measurement is not executed. A dedicated battery test equipment is not required. These in-life voltage curves are not acquired with a dedicated load profile; the low profile is dictated by the environmental circumstances.

Not all voltage curves acquired using such in-life voltage monitoring are suitable for locating the predetermined feature. For instance, the lower or upper voltage limits of a given voltage curve may be such that the predetermined feature is not captured by the voltage curve. Further, a charging rate or charging rate variation may be inappropriate for locating the predetermined feature. A DoD of a charging or discharging process associated with the voltage curve may be insufficient for locating the predetermined feature or the feature may be barely visible in the voltage curve (cf. FIG. 5). Accordingly, according to various examples, it is possible to filter the plurality of in-life voltage curves in the cloud repository based on a predetermined lower voltage of each of the plurality of in-life voltage curves and/or a predetermined lower SoC of each of the plurality of in-life voltage curves and/or a charging or discharging rate associated with each of the plurality of voltage curves. By such filtering, only such voltage curves are analyzed for detecting the predetermined feature for which a reasonable likelihood exists that the predetermined feature is visible. For instance, LiC18 features may only be visible for relatively small charging or discharging rates. For a LIB serving as traction battery of an electric vehicle, the charging or discharging rates of many in-life voltage curves may be too large so that the LiC18 is not visible.

At box 3010, the voltage curve is analyzed to detect the predetermined feature of the voltage curve. By appropriately configuring the charging process in box 3005 or appropriately filtering out the voltage curves in box 3005, the analysis to detect the predetermined feature tends to be more likely successful.

Box 3010 can include loading shape data that is indicative of an expected shape of the predetermined feature, e.g., from a respective database. Again, such shape data can be linked to a type of the battery and/or a state of the battery such as its operational temperature or predetermined knowledge of its SoH, i.e., an a-priori estimate of the SoH (cf. FIG. 5 where an example is shown in which the shape, here the amplitude, of the peak implementing the feature depends on the starting SoC). Then, a shape matching algorithm can be applied based on the shape data, to thereby locate the predetermined feature.

For instance, the predetermined feature may be a transient increase in the steepness of the voltage curve, as illustrated for the LiC18 feature 92 in FIG. 4. It would also be possible that the predetermined feature is the lower end of a plateau of the voltage curve, e.g., as would be the case for the LiC12 feature 91. All such shapes can be described by the shape data.

Sometimes, such features are more easily found in the differential voltage curve; hence, box 3010 can include determining a derivative of the voltage curve to locate the predetermined feature.

The feature is associated with a predetermined partial capacity 231 (denoted hereinafter) held by the battery when the feature is observed. For instance, the predetermined partial capacity 231 can be measured in a laboratory measurement, using Coulomb counting. During the laboratory measurement, the battery may not be under the control of the BMS, so that a full discharge to 0% SoC is possible (which is generally not possible while the batteries under the control of the SoC). The predetermined partial capacity 231 can be type-specific for the type of the battery. I.e., it would be possible to perform a lookup for the predetermined pressure capacity 231 in a repository, based on the type of the battery. The predetermined partial capacity may be invariant to an a-priori estimate of the SoH of the battery. I.e., it may be assumed that the predetermined partial capacity does not significantly vary as the battery ages. This is applicable for the LiC6 feature or the LiC12 feature 91 that are located at relatively small capacities (cf. FIG. 2; here, it is visible that the position of the LiC12 feature does not change significantly with ageing). The higher-capacity features for stage-n of Lithium intercalation, with *n* being III or IV, may show some residual dependency on the aging. Here, it would be conceivable that a predetermined dependency of the predetermined partial capacity on the a-priori estimate of the SoH is available and considered.

At optional box 3015 (cf. TAB. 1: phase 3), it is possible to obtain a current-voltage curve for a further charging process 252 that commences upon completing the charging process 251 of box 3005. A battery test equipment is controlled to charge the battery while recording a current-voltage curve for the charging process 252. The further charging process 252 may commence upon having detected the predetermined feature. The current-voltage curve 202 (cf. FIG. 4; here, only the voltage values are shown, but current values are captured as well) can then be integrated to measure a further partial capacity 232 (denoted as *C*₂) of the battery, the further partial capacity 232 being charged to the battery by the further charging process 252. Thus, box 3015 can include Coulomb counting for measuring the further partial capacity 232. The estimate of the total capacity 239 becomes more accurate by implementing the measurement of the further partial capacity 252.

Box 3015 is generally optional. Coulomb counting requires additional time for controlling the battery test equipment to acquire the current-voltage curve. In some scenarios, it may be preferable to skip box 3015 and directly commence at box 3020, to reduce the required measurement time (at the cost of reduced accuracy of the estimate of the total capacity 239).

If box 3015 is executed, it may be desirable to implement the charging process 252 underlying the current-voltage curve of box 3015 so that a relatively high charging rate is used (cf. TAB 1: phase 3). In particular, the charging rate of the charging process 252 of box 3015 can be larger than the charging rate of the charging process 251 of box 3005. Coulomb counting also works well at relatively high charging rates.

It would be possible that, at box 3015, the charging process 252 charges the battery until reaching the upper voltage threshold 269 that is applied by the BMS (as shown in FIG. 4). I.e., the battery may be charged to the upper edge of the available operational window. By fully charging the battery until reaching the upper voltage threshold, a more accurate estimate of the total capacity can be obtained. This is because a larger fraction of the total capacity can be measured. I.e., Coulomb counting can be implemented across a wider range of the total capacity of the battery.

At box 3020, an OCV of the battery is obtained. The OCV of the battery is obtained at the end of the charging process 251 of box 3005 or, if box 3015 is executed, at the end of the charging process 252 of box 3015. The OCV is obtained by allowing the battery to rest for a certain predetermined time duration. The OCV may be obtained from a dedicated measurement or from in-life measurement data, as previously explained in connection with box 3006 vis-a-vis box 3007.

Then, based on the OCV in the predetermined OCV-capacity lookup table, a further partial capacity 233 (denoted as *C*₃) can be determined as headroom to the total capacity 239, starting from the capacity held by the battery upon completion of the charging process 251 of box 3005 or, if applicable, the charging process 252 of box 3015.

At box 3025, the estimate of the total capacity 239 can then be calculated as the sum of the partial capacities, i.e., *C* = *C*₁ + *C*₂ + *C*₃*.* Note that *C*₁ and *C*₃ are estimates; while *C*₂ is measured. Depending on the ration between *C*₂ and each of *C*₁ and *C*₃, the error margins for the estimate of the total capacity 239 vary. Further, the error margins of the total capacity 239 depend on the ratio between *C*₁ and *C*₂ + *C*₃, which ratio depends on the choice of the observed feature.

Various modifications of the method of FIG. 3 are conceivable. For instance, in FIG. 3, box 3010 is shown to commence after box 3005. However, as a general rule, it would be possible that box 3010 is executed in parallel to box 3006. I.e., in other words, it would be possible that the voltage curve of the charging process 251 is analyzed while recording the voltage curve. I.e., an on-line analysis can be executed. Thus, it is possible to continuously search for the predetermined feature while capturing the measurement data. Then, responsive to detecting the predetermined feature, the charging process can be aborted and the method can commence at, e.g., box 3015 or box 3020. This reduces the overall time until the estimate of the total capacity is obtained. The charging process 251 employing a relatively low charging rate can be dimensioned as small as possible.

Still further, if the charging process 251 is not aborted upon finding the feature or if the stop voltage /SoC of the charging process 251 is offset significantly from the feature, the partial capacity charged to the battery by the charging process 251 at SoCs beyond the feature and until the charging process 252 commences may also be considered, as *C*_{1*}. This partial capacity *C*_{1*} may be measured by Coulomb counting; for this, current values may be recorded during the charging process 251.

Furthermore, instead of relying on a charging process in box 3007, it would also be possible to analyze a discharging process. The predetermined anode half-cell features may also be visible in such discharging processes.

Next, two example application scenarios of the method will be disclosed, as summarized in TAB. 2.

**TAB. 2: Two example application scenarios for the method of FIG. 3.**

| SCENARIO | BRIEF DESCRIPTION | DETAILS |
|---|---|---|
| 1 | Quick check | stage-III or stage-IV LixC feature OCV directly upon finding feature |
| 2 | Detailed check | Stage-I or stage-II LixC feature Coulomb counting to upper voltage threshold |

First, scenario 1 (cf. TAB. 2) will be explained. Here, a relatively fast estimation of the total capacity of the traction battery of an electric vehicle is to be executed. Initially, in a preparatory phase, a complete measurement of the voltage curve of the pristine cell of the same type to be later on checked is performed in a laboratory (no BMS). This is done to measure the partial capacity *C*₁ at the relevant feature, e.g., a feature arranged close to the center of the operating window of the battery. Typically, LiC18 feature may be used. Also, the laboratory measurement is used to determine an OCV look-up table. Next, upon completing the preparatory phase, the vehicle is connected to a test bench. At this point, the battery is under the control of the BMS. The load profile for charging the battery is loaded from a memory. The load profile is determined so as to perform the estimation of the total capacity as fast as possible. Details have been explained in connection with TAB. 1. In particular, during phase 1, the battery is charged or discharged so that the starting voltage/SOC is in the rough area of the feature. Here, the battery can be charged or discharged as fast as possible. Thus, the charging power at cell level in this phase 1 only depends on the battery size of the vehicle, i.e., how many cells are connected in series in parallel, as well as the maximum charging power of the vehicle. Then, phase 2 commences. The feature is to be located in the respective voltage curve. For the feature to be clearly visible, a relatively lower charging rate is required. That charging rate of the charging process during phase 2 may be predetermined in the laboratory in the preparatory phase. The charging rate is determined at cell-level, i.e., depends on the number of cells of the battery connected in parallel. An online analysis of the voltage curve is preferable, because the online analysis enables aborting the charging process of phase 2 quickly upon locating the feature. It is then possible to either charge - at maximum charging rate - until a desired endpoint - phase 3 (cf. TAB. 1) and subsequently capture an OCV value; it would also be possible to directly capture the OCV value, i.e., skip phase 3 and directly commence at phase 4 (cf. TAB. 1). Then, an OCV lookup can be determined to determine the overhead partial capacity at that voltage. All these partial capacities then enable to determine the estimate of the total capacity. As will be appreciated, the process above is tailored for speed: a feature is searched that is located relatively in the middle of the operational window. Furthermore, phase 3 may be skipped altogether.

Second, scenario 2 (cf. TAB. 2) will be explained. The same preparatory phase as in scenario 1 may be used. Then, a feature closer to the lower end of the operating window is selected, e.g., a stage-II LiCx feature. Thus, phase 1 (cf. TAB. 1), at least on average, may require additional time. In phase 2, a voltage curve is acquired in the respective charging process. For best quality, a minimum charging rate may be selected. In addition to voltage values, current values are acquired; this enables Coulomb counting of the partial capacity *C*_{1*} charged to the battery beyond the feature by the phase 2 charging process. Upon phase 2 completing, phase 3 is executed. The battery is charged all the way to the upper end of the operational window. Then, an OCV value is acquired. All these partial capacities then enable to determine the estimate of the total capacity. As will be appreciated, the process above is tailored for accuracy: a feature is searched that is located towards the lower end of the operational window. Furthermore, phase 3 is maximized.

Summarizing, techniques of analyzing a voltage curve to determine the total capacity of a battery have been disclosed. A position of a feature in the voltage curve is determined and ground-truth information on a partial capacity held by the battery when observing the feature is used. The feature, in other words, serves as a reference for the position along the capacity axis of a charging / discharging curve. This ground-truth information is relatively reliable if the feature is associated with the anode of the battery: anode degradation mechanisms are typically less pronounced if compared to cathode degradation mechanisms or loss of mobile inventory.

Further summarizing, at least the following EXAMPLES have been disclosed.

EXAMPLE 1.A method of determining an estimate of a total capacity (239) of a battery while the battery is under control of a battery-management system that limits an operational window (267) of the battery,
wherein the method comprises:
- obtaining (3005) a voltage curve (201) for a charging or discharging process (251) of the battery,
- analyzing (3010) the voltage curve (201) to detect a predetermined feature (91, 92) of the voltage curve (201), and
- determining (3025) the estimate of the total capacity of the battery based on a predetermined partial capacity (231) held by the battery when the predetermined feature (91, 92) is observed.

EXAMPLE 2. The method of EXAMPLE 1,
wherein the voltage curve (201) is obtained for a charging process (251),
wherein said obtaining the voltage curve comprises:
   - controlling a battery test equipment connected to the battery to charge or discharge the battery until a predetermined lower voltage (261) or lower state of charge is reached, and
   - controlling the battery test equipment to charge the battery starting from the predetermined lower voltage (261) or lower state of charge while recording the voltage curve for the charging process (251).

EXAMPLE 3. The method of EXAMPLE 2, further comprising:
- based on a type of the battery or a state of the battery, performing a look-up of information associated with the predetermined lower voltage (261) or lower state of charge in a database, and
- based at least on the information associated with the predetermined lower voltage (261) or lower state of charge and optionally based on an a-priori estimate of the state of health of the battery, setting the predetermined lower voltage (261) or lower state of charge.

EXAMPLE 4. The method of EXAMPLE 2 or 3, further comprising:
- based on at least one of a type of the battery or a state of the battery, performing a look-up of information associated with a charging rate of the charging process (251) in a database,
- based at least on the information associated with the charging rate and optionally based on an a-priori estimate of the state of health of the battery, setting the charging rate of (251) the charging process,
wherein the battery test equipment s controlled to charge the battery from the predetermined lower voltage or state of charge at the charging rate.

EXAMPLE 5. The method of any one of EXAMPLEs 2 to 4,
wherein the predetermined lower voltage or a voltage associated with the predetermined lower state of charge is offset from a lower edge of the operational window (267).

EXAMPLE 6. The method of any one of EXAMPLEs 2 to 5,
wherein the voltage curve is analyzed while recording the voltage curve for the charging process,
wherein the method further comprises:
   - responsive to detecting the predetermined feature of the voltage curve, aborting the charging process.

EXAMPLE 7. The method of EXAMPLE 1,
wherein said obtaining of the voltage curve comprises:
- loading (3007) the voltage curve from a cloud repository comprising a plurality of in-life voltage curves acquired during field operation of the battery.

EXAMPLE 8. The method of EXAMPLE 7, further comprising:
- filtering the plurality of in-life voltage curves based on at least a predetermined lower voltage of each of the plurality of in-life voltage curves, a predetermined lower state of charge of each of the plurality of in-life voltage curves, or a charging or discharging rate associated with each of the plurality of voltage curves.

EXAMPLE 9. The method of any one of the preceding EXAMPLEs, further comprising:
- obtaining a current-voltage curve for a further charging or discharging process (252) that commences upon completing the charging process (251), and
- integrating the current-voltage curve (202) to measure a further partial capacity (252) of the battery charged to the battery by the further charging or discharging process (252),
wherein the estimate of the total capacity (239) of the battery is further determined based on the further partial capacity (232) of the battery charged to the battery by the further charging process.

EXAMPLE 10. The method of EXAMPLE 9,
wherein a charging or discharging rate of the further charging process is larger than a charging or discharging rate of the charging process.

EXAMPLE 11. The method of EXAMPLE 9 or 10,
wherein the further charging or discharging process (252) charges or discharges the battery until reaching an edge (268, 269) of the operational window (267).

EXAMPLE 12. The method of any one of EXAMPLEs 9 to 11,
wherein said obtaining of the current-voltage curve for the further charging process comprises:
- controlling a battery test equipment to charge the battery upon completing the charging process and while recording the current-voltage curve for the further charging process.

EXAMPLE 13. The method of any one of the preceding EXAMPLEs, further comprising:
- obtaining an open-circuit voltage, OCV, of the battery upon completion of the charging or discharging process (251) and optionally a further charging or discharging process (252) that is subsequent to the charging or discharging process, and
- based on the OCV and a predetermined OCV-capacity look-up table, determining a further partial capacity (233) as headroom to the total capacity (239) and from a capacity held by the battery upon said completion of the charging or discharging process (251) and optionally the further charging or discharging process
(252), wherein the estimate of the total capacity (239) of the battery is further determined based on the further partial capacity (233) determined as the headroom to the total capacity (239) of the battery.

EXAMPLE 14. The method of any one of the preceding EXAMPLEs,
wherein the predetermined feature is dependent on a depth-of-discharging or discharging of the battery prior to the charging or discharging process.

EXAMPLE 15. The method of any one of the preceding EXAMPLEs,
wherein the predetermine feature is due to a state transition of an electrolyte intercalation at an anode of the battery.

EXAMPLE 16. The method of EXAMPLE 15,
wherein the anode is a Carbon anode,
wherein the electrolyte comprises Lithium,
wherein the predetermined feature is associated with an LixC6 intercalation stage state transition.

EXAMPLE 17. The method of EXAMPLE 16,
wherein the predetermined feature is a stage-II LiC12 feature, or
wherein the predetermined feature is a stage-n LixC6 feature, with *n* being III or larger.

EXAMPLE 18. The method of any one of the preceding EXAMPLEs,
wherein the predetermined feature is at a voltage along the voltage curve associated with a state of charge of the battery in the range of 20%-40%, or
wherein the predetermined feature is at a voltage along the voltage curve associated with a state of charge of the battery in the range of 50%-70%.

EXAMPLE 19. The method of any one of the preceding EXAMPLEs, further comprising:
- selecting the predetermined feature from a plurality of candidate features based on at least one of a requested duration of the charging or discharging process or a requested accuracy of the estimate of the total capacity.

EXAMPLE 20. The method of any one of the preceding EXAMPLEs, further comprising:
- loading, from a database, shape data indicative of an expected shape of the predetermined feature,
wherein said analyzing of the voltage curve comprises applying a shape matching algorithm based on the shape data, to locate the predetermined feature.

EXAMPLE 21. The method of any one of the preceding EXAMPLEs,
wherein the predetermined feature is a transient increase in a steepness of the voltage curve, or
wherein the predetermined feature is the lower end of a plateau of the voltage curve.

EXAMPLE 22. The method of any one of the preceding EXAMPLEs,
wherein the predetermined partial capacity (231) is type-specific for a type of the battery.

EXAMPLE 23. The method of any one of the preceding EXAMPLEs,
wherein the predetermined partial capacity (231) is invariant to an a-priori estimate of the state of health of the battery.

EXAMPLE 24. The method of any one of the preceding EXAMPLEs,
wherein said analyzing of the voltage curve comprises determining a derivative of the voltage curve to locate the predetermined feature.

EXAMPLE 25. A computing device comprising at least one processor and a memory, the at least one processor being configured to load program code form the memory and to execute the program code, the at least one processor, upon executing the program code, performing a method of any one of the preceding EXAMPLEs.

Although the invention has been shown and described with respect to certain preferred embodiments, equivalents and modifications will occur to others skilled in the art upon the reading and understanding of the specification. The present invention includes all such equivalents and modifications and is limited only by the scope of the appended claims.

For illustration, various examples employing a charging process to acquire a voltage curve have been disclosed. Similarly, it would be possible to employ a discharging process to acquire a voltage curve that is subsequently analyzed to locate a feature.

For further illustration, various examples have been discussed with respect to LIBs and ion intercalation features that are specific to graphite anodes. However, similar techniques may also be applied to other types of anode materials or even different types of ions shuttling between anode and cathode.

## Claims

1. A method of determining an estimate of a total capacity (239) of a battery while the battery is under control of a battery-management system that limits an operational window (267) of the battery,
wherein the method comprises:
- obtaining (3005) a voltage curve (201) for a charging or discharging process (251) of the battery,
- analyzing (3010) the voltage curve (201) to detect a predetermined feature (91, 92) of the voltage curve (201), and
- determining (3025) the estimate of the total capacity of the battery based on a predetermined partial capacity (231) held by the battery when the predetermined feature (91, 92) is observed.

2. The method of claim 1,
wherein the voltage curve (201) is obtained for a charging process (251),
wherein said obtaining the voltage curve comprises:
- controlling a battery test equipment connected to the battery to charge or discharge the battery until a predetermined lower voltage (261) or lower state of charge is reached, and
- controlling the battery test equipment to charge the battery starting from the predetermined lower voltage (261) or lower state of charge while recording the voltage curve for the charging process (251).

3. The method of claim 2, further comprising:
- based on a type of the battery or a state of the battery, performing a look-up of information associated with the predetermined lower voltage (261) or lower state of charge in a database, and
- based at least on the information associated with the predetermined lower voltage (261) or lower state of charge and optionally based on an a-priori estimate of the state of health of the battery, setting the predetermined lower voltage (261) or lower state of charge.

4. The method of claim 2 or 3, further comprising:
- based on at least one of a type of the battery or a state of the battery, performing a look-up of information associated with a charging rate of the charging process (251) in a database,
- based at least on the information associated with the charging rate and optionally based on an a-priori estimate of the state of health of the battery, setting the charging rate of (251) the charging process,
wherein the battery test equipment s controlled to charge the battery from the predetermined lower voltage or state of charge at the charging rate.

5. The method of any one of claims 2 to 4,
wherein the predetermined lower voltage or a voltage associated with the predetermined lower state of charge is offset from a lower edge of the operational window (267).

6. The method of any one of claims 2 to 5,
wherein the voltage curve is analyzed while recording the voltage curve for the charging process,
wherein the method further comprises:
- responsive to detecting the predetermined feature of the voltage curve, aborting the charging process.

7. The method of claim 1,
wherein said obtaining of the voltage curve comprises:
- loading (3007) the voltage curve from a cloud repository comprising a plurality of in-life voltage curves acquired during field operation of the battery.

8. The method of claim 7, further comprising:
- filtering the plurality of in-life voltage curves based on at least a predetermined lower voltage of each of the plurality of in-life voltage curves, a predetermined lower state of charge of each of the plurality of in-life voltage curves, or a charging or discharging rate associated with each of the plurality of voltage curves.

9. The method of any one of the preceding claims, further comprising:
- obtaining a current-voltage curve for a further charging or discharging process (252) that commences upon completing the charging process (251), and
- integrating the current-voltage curve (202) to measure a further partial capacity (252) of the battery charged to the battery by the further charging or discharging process (252),
wherein the estimate of the total capacity (239) of the battery is further determined based on the further partial capacity (232) of the battery charged to the battery by the further charging process,
wherein a charging or discharging rate of the further charging process is larger than a charging or discharging rate of the charging process.

10. The method of any one of the preceding claims, further comprising:
- obtaining an open-circuit voltage, OCV, of the battery upon completion of the charging or discharging process (251) and optionally a further charging or discharging process (252) that is subsequent to the charging or discharging process, and
- based on the OCV and a predetermined OCV-capacity look-up table, determining a further partial capacity (233) as headroom to the total capacity (239) and from a capacity held by the battery upon said completion of the charging or discharging process (251) and optionally the further charging or discharging process (252),
wherein the estimate of the total capacity (239) of the battery is further determined based on the further partial capacity (233) determined as the headroom to the total capacity (239) of the battery.

11. The method of any one of the preceding claims,
wherein the predetermined feature is dependent on a depth-of-discharging or discharging of the battery prior to the charging or discharging process.

12. The method of any one of the preceding claims,
wherein the predetermine feature is due to a state transition of an electrolyte intercalation at an anode of the battery,
wherein the anode is a Carbon anode,
wherein the electrolyte comprises Lithium,
wherein the predetermined feature is associated with an LixC6 intercalation stage state transition
wherein the predetermined feature is a stage-II LiC12 feature, or
wherein the predetermined feature is a stage-n LixC6 feature, with *n* being III or larger.

13. The method of any one of the preceding claims,
wherein the predetermined feature is at a voltage along the voltage curve associated with a state of charge of the battery in the range of 20%-40%, or
wherein the predetermined feature is at a voltage along the voltage curve associated with a state of charge of the battery in the range of 50%-70%.

14. The method of any one of the preceding claims, further comprising:
- selecting the predetermined feature from a plurality of candidate features based on at least one of a requested duration of the charging or discharging process or a requested accuracy of the estimate of the total capacity.

15. The method of any one of the preceding claims,
wherein the predetermined partial capacity (231) is invariant to an a-priori estimate of the state of health of the battery.
